# EUROPEAN PATENT APPLICATION

(11) **EP 1 795 093 A1**
(43) Date of publication of application: **13.06.2007**
(21) Application number: 05425874.4
(22) Date of filing: 09.12.2005
(51) Int. Cl.: A47J 31/40, A47J 31/46

(54) **Dispensing unit for coffee**

(71) Applicant: Gruppo Cimbali S.p.A., 20082 Binasco (MI) (IT)
(72) Inventor: Sala, Dario, 20082 Binasco (MI) (IT)
(74) Representative: Perani, Aurelio

(57) **Abstract**

Dispensing unit for the automatic preparation and dispensing of coffee, comprising a cylindrical body (2) with an infusion chamber (3) for containing a specified measured quantity of grounded coffee, with a closed base (8) provided with an opening (9) for dispensing the prepared beverage, and provided with an open top (7), and a pistonlike body (1) provided with a channel (13) for supplying heated pressurized water to the said chamber (3) for preparing the beverage, the said pistonlike body (1) being movable in a reciprocating way with respect to the said cylindrical body (2) to close and open the said chamber (3) by moving into and out of the said cylindrical body. The channel (13) of the pistonlike body (1) is provided with insulating means (19) made from materials having a low heat transfer coefficient so as to reduce the conduction towards the said pistonlike body (1) of the heat of the measured quantity of water flowing through the said channel.

## Description

The present invention relates to a dispensing unit for the automatic preparation and dispensing of coffee, comprising a cylindrical body with an infusion chamber for containing a specified measured quantity of ground coffee, with a closed base provided with an opening for dispensing the prepared beverage and provided with an open top, a pistonlike body provided with a channel for supplying heated pressurized water to the interior of the said chamber for the preparation of the beverage, the said pistonlike body being movable in a reciprocating way with respect to the said cylindrical body to close and open the said chamber by moving into and out of the said cylindrical body.

Dispensing units of the aforementioned type are known in the relevant art.

They are principally, although not exclusively, used for preparing espresso coffee in automatic dispensing machines which, as is known, can remain inactive for what may be a considerable period between one dispensing operation and the next. Although the dispensing units become hot in intensive operating conditions, they obviously tend to cool down during idle periods.

In order to produce coffee of excellent quality, while keeping this quality of the beverage constant over time regardless of the variation in the dispensing frequency, it is necessary to resolve the problem of keeping the dispensing unit, as far as possible, at a constant temperature.

As is known, in the preparation of high-quality coffee, particularly Italian-style espresso coffee, the volume of the measured quantity of hot water to be used is relatively small, its temperature must be kept in the vicinity of 90°C during its passage through the ground coffee powder present in the infusion chamber, its pressure must remain substantially in the vicinity of 9 bars, and, finally, the time taken to pass through the layer of ground coffee must not exceed 25 seconds.

Therefore, if the small measured quantity of hot water, at the specified temperature, for the preparation of a cup of coffee is required to pass through the pistonlike body of the unit after a relatively long idle period, when the dispenser has not been used and has therefore cooled down, the problem of undue and excessive cooling of the measured quantity of water arises. This is because some of the heat of the water is transmitted and transferred to the pistonlike body as a result of the unfavourable ratio of the volume of water to the mass of the dispenser.

Consequently, the quality of the dispensed coffee is unsatisfactory, particularly if the idle periods are long and allow the piston to cool down significantly.

In the prior art, it has been proposed, for example, that the cylindrical body, with the infusion chamber, be heated by means of an electrical resistance added to the said body, and that the pistonlike body, when idle, be housed within the infusion chamber so that it is also kept heated at a constant temperature during the idle period of the machine between each dispensing operation and the next.

However, this known technical solution is not free of drawbacks, since it increases the beverage production time.

This is because, with this known technique, the pistonlike body must be lifted out of the chamber after an idle period and before a measured quantity of ground coffee is placed in the infusion chamber, and this operation takes a significant amount of time.

In an alternative known technical solution, a heating element is applied to the piston as well, enabling it to remain hot even if positioned outside the infusion chamber during idle periods.

However, this latter known solution considerably increases the weight of the machinery.

The object of the present invention is therefore to overcome the drawbacks of the known art described above, by proposing a solution which enables high-quality coffee to be dispensed even after an idle period of the dispensing unit.

This object is achieved with a dispenser having the characteristics specified in Claim 1 below.

The invention will now be described more fully with reference to an example of its practical application, provided solely for guidance and without restrictive intent, and illustrated in the attached drawings, in which:
- Figure 1 shows, in longitudinal section, a dispensing unit according to the invention, with the pistonlike body lifted out of the cylindrical body having the infusion chamber;
- Figure 2 shows, in longitudinal section, the dispensing unit of Figure 1, with the pistonlike body in the position of insertion into the cylindrical body, forming the infusion chamber;

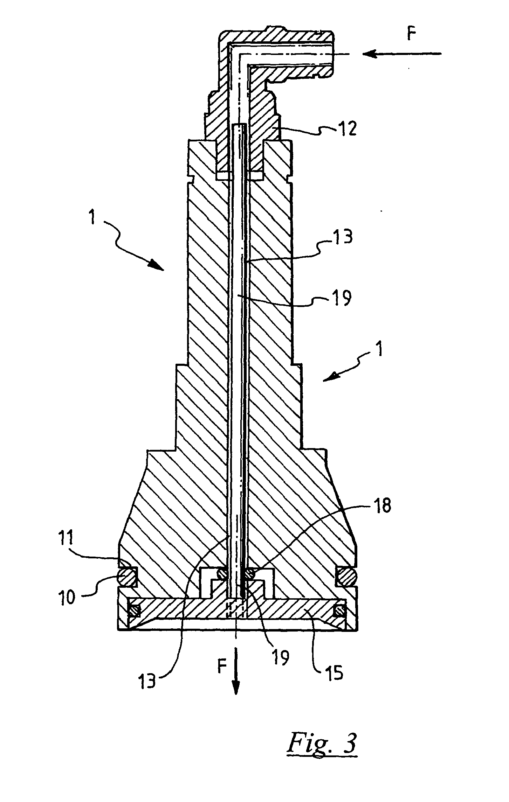

- Figure 3 shows, in longitudinal section, the pistonlike body according to the invention, on an enlarged scale;

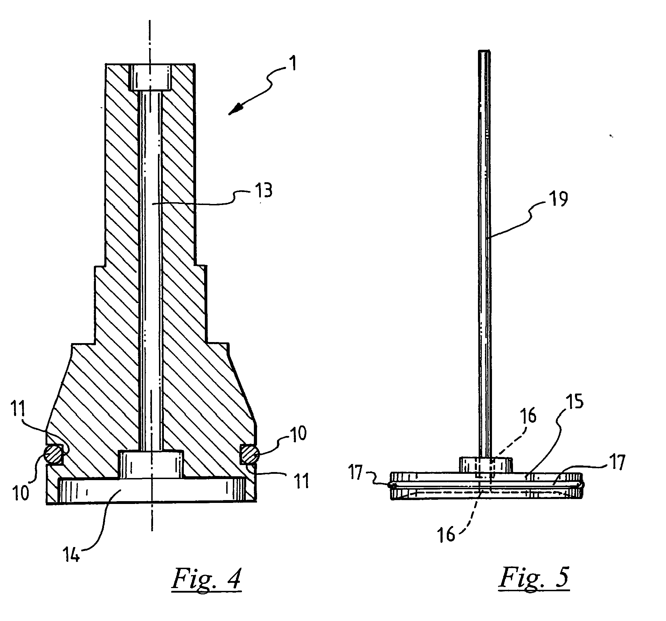

- Figure 4 shows a longitudinal section through the pistonlike body with the insulating means removed;
- Figure 5 shows a side view of the means for insulating the channels of the pistonlike body of the dispenser.

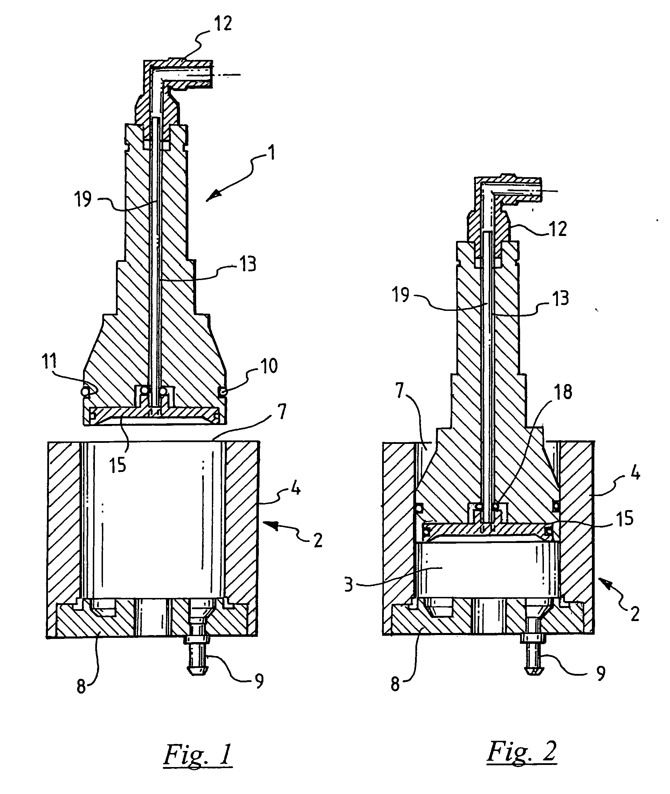

With reference to the aforesaid figures, the dispensing unit comprises a pistonlike body 1 and a cylindrical body 2 within which the infusion chamber 3 is formed when the pistonlike body 1 is in the position of insertion into the cylindrical body, as shown in Figure 2. The cylindrical body 2 is delimited laterally by the wall 4 and has an open top 7.

The base 8 is closed and is provided with an opening 9 for dispensing the beverage.

Preferably, the body 2 is provided with heating elements, such as electrical resistances, to keep it at the correct operating temperature even during the idle period between one dispensing operation and the next. These heating elements are not shown, since they are known and conventional.

A specified measured quantity of ground coffee is placed in the infusion chamber 3, and then, according to the operating sequence of the machine, the chamber is sealed by means of the pistonlike body 1.

This body is also provided, in a conventional way, with a ring seal 10 housed in a peripheral groove 11 to form a seal with the inner surface of the wall 4 of the cylindrical body 2.

The measured quantity of water, heated in a suitable conventional boiler (not shown) to the temperature considered optimal for the preparation of a satisfactory beverage, usually approximately 90°C, is sent to the pistonlike body 1 through the connector 12.

This connector 12 is connected to the channel 13 which passes longitudinally through the pistonlike body 1 of the dispenser and opens in a circular cavity 14 positioned at the end of the piston which is intended to enter the cylindrical body 2 and constantly faces the infusion chamber 3.

In the cavity 14 there is positioned, in a conventional way, a diffuser element 15 provided with an axial passage 16 for distributing the water, through a conventional spray head, on to the measured quantity of ground coffee in the infusion chamber 3.

A ring seal 17 is provided on the periphery of the diffuser element 15, which takes the form of a circular disc, to form a seal with the inner wall of the cavity 14. A further seal 18, with a central hole aligned with the channel 13, is positioned to form a watertight seal between the said diffuser element 15 and the channel 13 of the pistonlike body 1.

According to the invention, a tube 19, made from material with a low heat transfer coefficient, for example a plastics material, preferably a thermoplastic material, is inserted into the channel 13. This tube 19 extends from the inside of the connector 12 and forms a connection to the axial passage 16 of the diffuser element 15. It thus forms an insulating means which prevents, or at least significantly limits, the transmission to the pistonlike body 1 of the heat of the measured quantity of water flowing towards the infusion chamber 3.

Consequently, the measured quantity of water reaches the ground coffee powder without any significant departure from the optimal temperature conditions, even if the pistonlike body has become cold because of a prolonged idle period between one dispensing operation and the next.

Also according to the invention, the diffuser element 15 can advantageously be made from plastics material in order to further limit the possibility of heat exchange between the small volume of incoming hot water and the mass of the pistonlike body 1.

Alternatively, the tube 19 can be replaced with a lining of plastics material of adequate thickness, applied directly on to the inner wall of the channel 13, without departure from the scope of protection of the invention as defined in the following claims.

## Claims

1. Dispensing unit for the automatic preparation and dispensing of coffee, comprising a cylindrical body (2) with an infusion chamber (3) for containing a specified measured quantity of ground coffee, with a closed base (8) provided with an opening (9) for dispensing the prepared beverage, and provided with an open top (7), a pistonlike body (1) provided with a channel (13) for supplying heated pressurized water to the interior of the said chamber (3) for the preparation of the beverage, the said pistonlike body (1) being movable in a reciprocating way with respect to the said cylindrical body (2) to close and open the said chamber (3) by moving into and out of the said cylindrical body, **characterized in that** the said channel (13) of the pistonlike body (1) is provided with insulating means (19) made from materials having a low heat transfer coefficient so as to reduce the conduction towards the said pistonlike body (1) of the heat of the measured quantity of water flowing through the said channel.

2. Dispensing unit according to Claim 1, **characterized in that** the said insulating means comprise a tubular element (19) of plastics material passing through the channel (13) of the said pistonlike body, the said tubular element (19) being connected by its outer end to the pistonlike body (1) to the source of pressurized hot water, and opening at its opposite end in the said infusion chamber (3).

3. Dispensing unit according to Claims 1 and 2, **characterized in that** the said pistonlike body (1) comprises a diffuser element (15) for distributing the water into the infusion chamber (3), the said diffuser element (15) being connected to the said end of the tubular element (19) which faces the said infusion chamber (3).

4. Dispensing unit according to Claim 3, **characterized in that** the said diffuser element (15) for distributing the water into the infusion chamber (3) consists of a disc made from a plastics material with a low heat transfer coefficient, housed in a cavity (14) provided in the said pistonlike body (1) and facing the said infusion chamber (3).

5. Dispensing unit according to Claims 1 to 4, **characterized in that** it comprises watertight sealing members (17, 18) positioned between the said diffuser element (15) and the said pistonlike body (1) to counteract leakage of hot water from the diffuser element (15) to the pistonlike body (1).

6. Dispensing unit according to Claim 1, **characterized in that** the said means of insulating the said channel (13) comprise a layer of plastics material covering the inner surface of the channel.

7. Dispensing unit according to Claims 1 to 6, **characterized in that** the said cylindrical body (2) comprises heating elements for keeping it at the correct operating temperature during an idle period between one dispensing operation and the next.
